# EUROPÄISCHE PATENTSCHRIFT

(11) **EP 3 615 357 B1**
(45) Veröffentlichungstag und Bekanntmachung des Hinweises auf die Patenterteilung: **03.11.2021**
(21) Anmeldenummer: 18715580.9
(22) Anmeldetag: 27.03.2018
(51) Int. Cl.: B60G 7/00

(54) **ACHSSTREBE**
SUSPENSION ARM
BRAS DE SUSPENSION

(30) Priorität: 28.04.2017 DE 102017207164
(43) Veröffentlichungstag der Anmeldung: 04.03.2020
(73) Patentinhaber: ZF Friedrichshafen AG, 88046 Friedrichshafen (DE)
(72) Erfinder: RUPFLIN, Thomas, 88719 Stetten (DE); SCHWARZ, Thomas, 88138 Sigmarszell (DE); STIEGLITZ, Andre, 49086 Osnabrück (DE); BAUER, Philipp, 88097 Eriskirch (DE); MÜLLER, Ingolf, 76872 Minfeld (DE); BÜRGMANN, Manfred, 88213 Ravensburg (DE)
(74) Vertreter: ZF Friedrichshafen AG
(86) Internationale Anmeldenummer: PCT/EP2018/057694
(87) Internationale Veröffentlichungsnummer: WO 2018/197136

(56) Entgegenhaltungen:
- EP-A1- 2 722 533
- EP-A1- 2 995 481
- EP-A1- 3 235 667
- WO-A1-2008/082305
- DE-A1-102009 009 392
- DE-A1-102012 017 940
- DE-A1-102012 218 686
- DE-A1-102013 225 911
- DE-A1-102015 215 077
- DE-A1-102015 216 966
- JP-A- H10 272 707
- JP-A- S61 287 807
- JP-A- 2000 337 416

## Beschreibung

Die vorliegende Erfindung betrifft eine Achsstrebe mit den Merkmalen nach Anspruch 1.

Achsstreben für Fahrwerke von Fahrzeugen, beispielsweise NKWs, LKWs oder PKWs werden vorwiegend axial sowohl durch Druck- als auch durch Zugkräfte belastet. Bei Wanklasten wird die Achsstrebe in geringem Maße auf Torsion beansprucht. Aus der DE102015215077 A1 ist eine Achsstrebe bekannt, die einen Schaft und zwei Lagerbereiche umfasst. Die Achsstrebe weist eine Tragwicklung, ein Kernprofil und zwei Lasteinleitelemente auf, wobei die Tragwicklung und das Kernprofil aus Faserkunststoffverbundmaterial ausgeformt sind.

Die JP H10 272707 A offenbart einen Lenker für ein Kraftfahrzeug, mit einer Stange, zwei zylindrischen Lageraufnahmen, die jeweils an einem Ende der Stange vorgesehen sind, und zwei Gummilagern, die von den Lageraufnahmen aufgenommen sind, wobei die Stange und die Lageraufnahmen jeweils aus faserverstärktem Kunststoff bestehen.

Die EP 2 722 533 A1 offenbart den Oberbegriff des Anpruchs 1 und beschreibt zudem ein Verfahren zur Herstellung einer Klebeverbindung zwischen einem Rohr und einem Anschlussstück, wobei das Rohr und das Anschlussstück Kräften in mindestens einer Längsrichtung ausgesetzt sind. Die Klebeverbindung umfasst mindestens eine innere Klebefuge und eine äußere Klebefuge, die einen geschlossenen oder halbgeschlossenen Querschnitt um die Längsachse der Verbindung hat, wobei die Stärke der Klebefuge von einem anschlussstückseitigen Ende zu einem rohrseitigen Ende variiert. Das Rohr und das Anschlussstück weisen bevorzugt einen zylindrischen Querschnitt auf, können aber auch einen anderen geschlossenen oder halb geschlossenen Querschnitt aufweisen.

Die EP 2995481 A1 offenbart einen Fahrwerklenker mit einem Lenkerkörper, der durch ein hohles, extrudiertes Profil gebildet wird, dessen Querschnitt eine durch Seitenwände gebildete, geschlossene Außenkontur und mindestens eine das Profil im Inneren in mindestens zwei innere Hohlräume aufteilende, innere Trennwand aufweist. In Richtung einer Längsachse des Lenkers weist das extrudierte Profil die Länge des zu erhaltenden Lenkers auf, wobei ein mittlerer Abschnitt des Lenkers an mindestens einer Seitenwand, von der aus sich keine innere Trennwand erstreckt, zerspant wird, ohne dass die Zerspanung die mindestens eine innere Trennwand erreicht, und wobei die Seitenwände, von denen aus sich die mindestens eine innere Trennwand erstreckt, eine Endöffnung in jedem Endbereich des Lenkers aufweisen, zwischen denen der mittlere Abschnitt angeordnet ist.

Die WO 2008/082305 A1 beschreibt einen mit Löchern versehenen Querlenker, der Armabschnitte und einen Zwischenabschnitt aufweist. Der Querlenker ist einstückig aus einem bearbeiteten Werkstück hergestellt, vorzugsweise aus einem extrudierten Profil, welches ein Basiswandelement und mindestens eine senkrechte Seitenwand aufweist, wobei ein erster Teil des Werkstücks die Armabschnitte und ein zweiter Teil des Werkstücks den Zwischenabschnitt bildet. Die Armabschnitte sind als Bögen ausgebildet, zwischen denen ein freier Raum vorgesehen ist.

Der vorliegenden Erfindung liegt ausgehend vom Stand der Technik die Aufgabe zu Grunde, eine verbesserte Achsstrebe vorzuschlagen, welche eine geringe Bauteilmasse aufweist und kostengünstig herzustellen ist. Zudem soll die Achsstrebe ein gutes Belastungsverhalten aufweisen, unter anderem sollen Spannungen innerhalb der Achsstrebe in verbesserter Art und Weise aufgenommen werden können. Die Achsstrebe soll eine hohe laterale Steifigkeit aufweisen. Die vorgeschlagene Achsstrebe soll zudem modularisierbar sein.

Die vorliegende Erfindung schlägt ausgehend von der vorgenannten Aufgabe eine Achsstrebe mit den Merkmalen nach Patentanspruch 1 vor. Weitere vorteilhafte Ausgestaltungen und Weiterbildungen gehen aus den Unteransprüchen hervor.

Eine Achsstrebe für ein Fahrzeug umfasst einen Schaft und zwei Lagerbereiche, wobei die Achsstrebe ein Tragprofil und zwei Lasteinleitelemente aufweist. Das Tragprofil ist aus Faserkunststoffverbundmaterial ausgebildet. Ein erstes Lasteinleitelement ist an einem ersten Lagerbereich der zwei Lagerbereiche angeordnet, ein zweites Lasteinleitelement ist an einem zweiten Lagerbereich der zwei Lagerbereiche angeordnet und das Tragprofil ist an dem Schaft räumlich zwischen den beiden Lagerbereichen angeordnet. Das Tragprofil weist einen ersten Verbindungsbereich, der dem ersten Lagerbereich zugewandt ist, und einen zweiten Verbindungsbereich, der dem zweiten Lagerbereich zugewandt ist, auf. Jedes Lasteinleitelement weist eine Aufnahme auf, wobei das Tragprofil mittels seines ersten Verbindungsbereichs und mittels der Aufnahme des ersten Lasteinleitelements durch eine Klebeverbindung mit dem ersten Lasteinleitelement verbunden ist, und wobei das Tragprofil mittels seines zweiten Verbindungsbereichs und mittels der Aufnahme des zweiten Lasteinleitelements durch eine weitere Klebeverbindung mit dem zweiten Lasteinleitelement verbunden ist.

Die Achsstrebe weist einen Schaft und zwei Lagerbereiche auf. Der Schaft ist hierbei zwischen den beiden Lagerbereichen angeordnet und mit diesen verbunden. Die Achsstrebe erstreckt sich somit von dem ersten Lagerbereich über den Schaft zu dem zweiten Lagerbereich. Der erste Lagerbereich begrenzt die Achsstrebe zu einer ersten Seite hin, der zweite Lagerbereich begrenzt die Achsstrebe zu einer zweiten Seite hin. Der Schaft kann hierbei länger als breit sein, wobei der Schaft beispielsweise eine geringere Breite aufweisen kann als die beiden Lagerbereiche an ihrer breitesten Stelle. Die genaue Ausformung des Schafts hängt dabei ab von dem zu Verfügung stehenden Bauraum. Die Lagerbereiche sind erfindungsgemäß von ihrer Grundfläche her zylindrisch ausgeformt.

Die Achsstrebe kann in einem Fahrwerk eines Fahrzeugs verwendet werden, z. B. in einem NKW, LKW oder PKW. Auf die Achsstrebe wirken in einem Fahrbetrieb Druck-und Zugkräfte, die diese axial belasten. Axial bedeutet hierbei in Längsrichtung der Achsstrebe, wobei diese Längsrichtung durch die beiden Lagerbereiche festgelegt ist. In anderen Worten ist die Längsrichtung der Achsstrebe und somit eine Längsachse der Achsstrebe von dem ersten Lagerbereich zu dem zweiten Lagerbereich entlang des Schafts definiert. Des Weiteren wird die Achsstrebe auf Torsion beansprucht, wenn an dem Fahrwerk, in welchem die Achsstrebe Verwendung findet, eine Wanklast auftritt. Wird an der Achsstrebe beispielsweise ein Wagenheber angesetzt, tritt ein sogenannter Missbrauchslastfall auf, d. h. auf die Achsstrebe wirken Biegebeanspruchungen.

Die Achsstrebe weist das Tragprofil auf. Dieses Tragprofil ist aus FKV ausgeformt. Das Tragprofil kann aus einem carbonfaserverstärkten Kunststoffverbund (CFK) ausgeformt sein. Das Tragprofil kann alternativ dazu aus einem glasfaserverstärkten Kunststoffverbund (GFK) oder aus einem aramidverstärkten Kunststoffverbund (AFK) oder aus einem anderen geeigneten FKV ausgeformt sein. Wiederum alternativ dazu kann das Tragprofil aus einer Materialkombination verschiedener FKVs ausgeformt sein, beispielsweise kann ein Teilbereich des Tragprofils aus CFK und ein anderer Teilbereich des Tragprofils aus GFK ausgeformt sein. Das Tragprofil ist endlosfaserverstärkt. Alternativ dazu kann das Tragprofil aus einem metallischen Werkstoff ausgeformt sein. Die Achsstrebe ist ein geometrischer Extrusionskörper, welcher eine geometrische Mantelfläche und zwei geometrische Deckflächen aufweist.

Die Achsstrebe weist an jedem ihrer Lagerbereiche ein Lasteinleitelement auf. Jedes Lasteinleitelement weist eine Aussparung für ein Lager auf. Jede Aussparung der Lasteinleitelemente ist geeignet je ein Lager, z. B. ein Gummi-Metall-Lager, eine Bolzenverbindung oder ein Elastomerlager, aufzunehmen. Mittels dieser Aussparungen wird eine Wirkverbindung zwischen den Lasteinleitelementen und den Lagern hergestellt. Die Lasteinleitelemente sind ausgehend von einer Lasteinleitung über die jeweilige Aussparung ausgestaltet. Beispielsweise kann jedes Lasteinleitelement an dem Bereich, welcher dem Tragprofil benachbart ist, eine oder mehrere Längsnuten oder eine oder mehrere Quernuten aufweisen. Weiterhin kann jedes Lasteinleitelement einen Bereich aufweisen, der materialfrei ist, wobei die Ausformung des materialfreien Bereichs sich an dem Spannungsverlauf in dem jeweiligen Lasteinleitelement orientiert.

Jedes Lasteinleitelement weist eine Aufnahme auf, die dazu eingerichtet ist, dass das Lasteinleitelement mit dem jeweiligen Verbindungsbereich des Tragprofils verbunden werden kann. Beide Lasteinleitelemente weisen vorzugsweise gleichförmig ausgeformte Aufnahmen auf, können aber auch voneinander unterschiedlich ausgeformte Aufnahmen aufweisen. Die Aufnahme jedes Lasteinleitelements ist an demjenigen Ende des Lasteinleitelements angeordnet, die dem Tragprofil zugewandt ist, d. h. gegenüber der Aussparung für das Lager.

Erfindungsgemäß sind die Längsnuten dabei so ausgebildet, dass diese den jeweiligen Verbindungsbereich des Tragprofils aufnehmen können. Erfindungsgemäß ist die Aufnahme ausgeform als drei Längsnuten und eine Quernut, die innerhalb des jeweiligen Lasteinleitelements ausgeformt sind. Die Nuten sind dabei so ausgebildet, dass diese den jeweiligen Verbindungsbereich des Tragprofils aufnehmen können. Alternativ kann die Aufnahme als Passung innerhalb des jeweiligen Lasteinleitelements ausgeformt sein, die so ausgebildet ist, dass diese den jeweiligen Verbindungsbereich des Tragprofils aufnehmen kann. Wiederum alternativ dazu kann die Aufnahme als eine Längsnut, die innerhalb des jeweiligen Lasteinleitelements ausgeformt ist, ausgeformt sein, wobei diese so ausgebildet ist, dass diese den jeweiligen Verbindungsbereich des Tragprofils aufnehmen kann. Wiederum alternativ dazu kann die Aufnahme als ein Fügebereich der Mantelfläche des jeweiligen Lasteinleitelements ausgeformt sein, wobei diese so ausgebildet ist, dass diese mit dem jeweiligen Verbindungsbereich des Tragprofils gefügt werden kann.

Räumlich zwischen den beiden Lasteinleitelementen ist das Tragprofil angeordnet. Der Schaft der Achsstrebe weist somit das Tragprofil auf. Das Tragprofil weist den ersten Verbindungsbereich, der dem ersten Lagerbereich zugewandt ist, und den zweiten Verbindungsbereich, der dem zweiten Lagerbereich zugewandt ist, auf. Der erste Verbindungsbereich begrenzt das Tragprofil zu einer ersten Seite hin, der zweite Verbindungsbereich begrenzt das Tragprofil zu einer zweiten Seite hin. Das Tragprofil erstreckt sich also entlang der Längsachse der Achstrebe von dem ersten Verbindungsbereich zu dem zweiten Verbindungsbereich. Jeder Verbindungsbereich dient dazu das Tragprofil zu verbinden mit den beiden Lasteinleitelementen. Das Tragprofil weist in wenigstens einem Teilbereich, vorzugsweise in den Verbindungsbereichen, eine unidirektionale Faserverstärkung in Längsrichtung der Achsstrebe auf. Das Tragprofil kann auch insgesamt eine unidirektionale Faserverstärkung in Längsrichtung der Achsstrebe aufweisen.

Das Tragprofil kann einstückig oder mehrteilig ausgeformt sein. Bei einer einstückigen Ausformung wird das Tragprofil in einem Stück hergestellt, ist also nicht aus verschiedenen Bauelementen zusammengefügt. Beispielsweise kann das Tragprofil mittels eines Pultrusionsverfahrens oder mittels eines Pulwindingverfahrens hergestellt werden. Das einstückige Tragprofil kann nicht zerstörungsfrei zerlegt werden. Bei einer mehrteiligen Ausformung ist das Tragprofil aus mehreren Bauelementen zusammengefügt, die beispielsweise miteinander verklebt sein können, so dass ein zerstörungsfreies Lösen der einzelnen Bauelemente nicht mehr möglich ist. Dadurch ist das Tragprofil kostengünstig herzustellen. Das Tragprofil kann kontinuierlich gefertigt werden, wodurch sich eine Modularisierbarkeit realisieren lässt. Das Tragprofil kann in anderen Worten bei der kontinuierlichen Fertigung auf eine für einen spezifischen Fahrzeugtyp benötigte Länge des Schafts abgelängt werden.

Der erste Verbindungsbereich des Tragprofils ist verklebt mit der Aufnahme des ersten Lasteinleitelements. Es besteht also eine Klebeverbindung zwischen dem ersten Lasteinleitelement und dem Tragprofil. Der zweite Verbindungsbereich des Tragprofils ist verklebt mit der Aufnahme des zweiten Lasteinleitelements. Es besteht also eine Klebeverbindung zwischen dem zweiten Lasteinleitelement und dem Tragprofil. Somit sind das erste und das zweite Lasteinleitelement verbunden mit dem Tragprofil. Vorzugsweise liegt der Klebstoff in flüssiger Form vor und ist elastisch. Die Verklebung des Tragprofils sowohl mit dem ersten Lasteinleitelement als auch mit dem zweiten Lasteinleitelement ist flächig ausgebildet. Das heißt, der Klebstoff kontaktiert sowohl die jeweilige Aufnahme als auch das jeweilige Lasteinleitelement flächig. Diese flächige Verklebung kann beispielsweise an jeder Stelle der Klebeverbindung dieselbe Klebstoffschichtstärke, im Sinne einer räumlichen Ausdehnung des Klebstoffs, aufweisen, alternativ kann die flächige Verklebung an wenigstens einer Stelle der Verklebung eine unterschiedliche Klebstoffschichtstärke zu der übrigen Verklebung aufweisen. Dies heißt, der Klebstoff an kann einer Stelle dicker vorliegen als an einer anderen Stelle. Durch eine erhöhte Klebstoffschichtstärke an wenigstens einer Stelle der Klebeverbindung ist an dieser Stelle eine höhere Elastizität, eine höhere Duktilität bzw. Bruchdehnung ausgebildet. Die erhöhte Klebstoffschichtstärke an wenigstens einer Stelle der Klebeverbindung kann beispielsweise durch eine angepasste Ausformung jeder Aufnahme erreicht werden.

Ist beispielsweise die Aufnahme des ersten Lasteinleitelements als eine Längsnut oder als zwei Längsnuten oder als drei Längsnuten und eine Quernut ausgebildet, kann jede Nut vollständig mit Klebstoff gefüllt werden, so dass der erste Verbindungsbereich des Tragprofil, der in diese Aufnahme gesteckt wird, vollständig mit Klebstoff benetzt ist. Zusätzlich kann der erste Verbindungsbereich vor dem Fügen mit Klebstoff bedeckt werden. Beim Fügen wird der Klebstoff zu einem Teil aus der Aufnahme des ersten Lasteinleitelements verdrängt, wodurch eine Luftblasenbildung reduziert werden kann. Dies kann selbstverständlich für das zweite Lasteinleitelement und den zweiten Verbindungsbereich ebenso erfolgen. Alternativ dazu kann die Verklebung einschnittig ausgebildet sein. Dies heißt, dass die Aufnahme des ersten Lasteinleitelements nicht vollständig mit Klebstoff gefüllt ist, sondern dass dieser gezielt aufgetragen ist auf zwei sich gegenüberliegende Seitenflächen der Aufnahme, die als Nut ausgebildet ist. Der erste Verbindungsbereich des Tragprofils ist ebenfalls nur an zwei Seitenflächen, die mit den Seitflächen der Aufnahme korrespondieren, mit Klebstoff benetzt ist. Die Verklebung ist in diesem Fall nicht umschließend. Dies kann selbstverständlich für das zweite Lasteinleitelement und den zweiten Verbindungsbereich ebenso sein.

Es ist vorteilhaft, dass die Anzahl der Schritte im Herstellungsverfahren deutlich reduziert ist im Vergleich zum Stand der Technik. Zudem ist das Herstellungsverfahren kostengünstiger und einfacher im Vergleich zum Stand der Technik. Weiterhin ist die Achsstrebe modularisierbar.

Wird bei der Verwendung der Achsstrebe in einem Fahrzeug eine axiale Last über die Lasteinleitelemente in die Achsstrebe eingeleitet, z. B Druck- oder Zugkräfte, wird diese Last von den Lasteinleitelementen flächig mittels Schub an das Tragprofil weitergeleitet. Das Tragprofil nimmt diese axiale Last auf. Die Achsstrebe ist auf Grund der Ausformung des Tragprofils aus FKV leichter als herkömmliche metallische Achsstreben. Die dargestellte Achsstrebe kann in Ihrer Größe so variiert werden, dass diese in einem NKW verwendet werden kann. Alternativ dazu kann die Achsstrebe in Ihrer Größe so variiert werden, dass diese in einem PKW verwendet werden kann. Die Achsstrebe kann in der vorgeschlagenen Bauweise auch als Koppelstange, Pendelstütze oder Stabilisatorstange genutzt werden.

Erfindungsgemäß ist das Tragprofil ausgeformt aus einem Kernprofil und zwei Längsprofilen, wobei die Längsprofile derart mit dem Kernprofil verbunden sind, dass ein erstes der Längsprofile eine erste Seitenfläche des Kernprofils, die parallel ist zu einer Längsachse der Achsstrebe, vollständig bedeckt, und dass ein zweites der Längsprofile eine zweite Seitenfläche des Kernprofils, die parallel ist zu der Längsachse der Achsstrebe und parallel zu der ersten Seitenfläche, vollständig bedeckt, wobei die Längsprofile die Verbindungsbereiche aufweisen.

Die Längsprofile sind in anderen Worten als dünne Materialstreifen ähnlich einer rechteckigen Platte ausgeformt. Die beiden Längsprofile sind vorzugsweise gleichförmig ausgebildet. Jedes Längsprofil weist eine Längserstreckung auf, die die Stärke des Längsprofils bei weitem übersteigt. Beide Längsprofile weisen eine unidirektionale Faserverstärkung auf, wobei die Fasern in Längsrichtung ausgerichtet sind. Die Längsrichtung jedes Längsprofils ist dieselbe Längsrichtung wie die der Achsstrebe. Die Längsprofile weisen wegen der unidirektionalen Faserverstärkung eine hohe Steifigkeit und Festigkeit auf.

Das Kernprofil ist rohrförmig ausgebildet und weist einen doppel-H-förmigen Querschnitt auf. Das Kernprofil kann eine geringe Steifigkeit aufweisen. Das Kernprofil ist beispielsweise aus einem FKV ausgebildet, dass einen deutlich von 0° abweichenden Faserwinkel, beispielsweise um 45°, aufweist, und somit eine gewisse axiale Weichheit aufweist. Durch den doppel-H-förmigen Querschnitt ist die Tragfähigkeit des Kernprofils und somit der gesamten Achsstrebe im Vergleich zum Stand der Technik verbessert. Der verfügbare Bauraum wird nahezu vollständig ausgenutzt durch das Kernprofil. Ein Einfallen des Kernprofils unter dem hohen Druck, der beim Aushärten der Achsstrebe mit einer Tragwicklung aus FKV, vorzugsweise aus CFK, in einer Presse oder in einem Autoklav vorherrscht, wird durch den doppel-H-förmigen Querschnitt verhindert. Das Kernprofil ist also derart ausgestaltet, dass dieses hohen Außendrücken standhalten kann.

Das Kernprofil weist zwei Seitenflächen auf, die parallel zueinander sind und in Längsrichtung der Achsstrebe orientiert. Diese Seitenflächen sind bei einem nicht erfindungsgemäßen H-förmigen oder erfindungsgemäßen doppel-H-förmigen Querschnitt jeweils die senkrechten Striche des H, bei einem nicht erfindungsgemäßen rechteckigen Querschnitt jeweils die senkrechten Seiten, und bei einem nicht erfindungsgemäßen Plusförmigen Querschnitt die Seitenflächen des Plusquerstrichs. Die erste Seitenfläche des Kernprofils ist vollständig bedeckt von dem ersten Längsprofil, das mit dieser ersten Seitenfläche verbunden ist. Dabei kann das erste Längsprofil vorzugsweise eine größere Längserstreckung aufweisen als das Kernprofil, so dass das erste Längsprofil beidseitig in Längsrichtung über die erste Seitenfläche des Kernprofils hinausragt. Die zweite Seitenfläche des Kernprofils ist vollständig bedeckt von dem zweiten Längsprofil, das mit dieser zweiten Seitenfläche verbunden ist. Dabei kann das zweite Längsprofil vorzugsweise eine größere Längserstreckung aufweisen als das Kernprofil, so dass das zweite Längsprofil beidseitig in Längsrichtung über die zweite Seitenfläche des Kernprofils hinausragt.

Der Abschnitt des ersten Längsprofils, der über die erste Seitenfläche auf Seiten des ersten Lasteinleitelements hinausragt, und der Abschnitt des zweiten Längsprofils, der über die zweite Seitenfläche auf Seiten des ersten Lasteinleitelements hinausragt, formen den ersten Verbindungsbereich des Tragprofils aus. Der Abschnitt des ersten Längsprofils, der über die erste Seitenfläche auf Seiten des zweiten Lasteinleitelements hinausragt, und der Abschnitt des zweiten Längsprofils, der über die zweite Seitenfläche auf Seiten des zweiten Lasteinleitelements hinausragt, formen den zweiten Verbindungsbereich des Tragprofils aus.

Alternativ dazu kann die Längserstreckung des Kernprofils dieselbe sein wie die Längserstreckung der beiden Längsprofile, wobei der erste Verbindungsbereich des Tragprofils das Ende des Tragprofils ausformt, das dem ersten Lasteinleitelement zugewandt ist, und wobei der zweite Verbindungsbereich des Tragprofils das Ende des Tragprofils ausformt, das dem zweiten Lasteinleitelement zugewandt ist. In Hochrichtung sind das erste Längsprofil und das zweite Längsprofil sowie das Kernprofil vorzugsweise gleichhoch erstreckt. Die Hochrichtung ist senkrecht zu der Längsrichtung.

Durch die Ausformung des Tragprofils aus zwei Längsprofilen und einem Kernprofil ist eine modularisierte Herstellung auf einfache und kostengünstige Art und Weise möglich.

Nach einer weiteren Ausführungsform sind die Längsprofile mit dem Kernprofil verklebt. Die beiden Längsprofile sind dabei vorzugsweise aus demselben FKV, z. B. aus CFK ausgeformt. Das Kernprofil kann aus einem FKV ausgeformt sein, der von dem FKV der beiden Längsprofile unterschiedlich ist, oder aus dem gleichen FKV wie die beiden Längsprofile, z. B. aus CFK oder GFK. Das Kernprofil an seinen Seitenflächen eine Oberflächenbehandlung aufweisen, die das Verkleben begünstigt, z. B. kann die Seitenfläche vollständig oder in einem Teilbereich aufgeraut sein. Die beiden Längsprofile können an ihren Flächen, die mit dem Kernprofil verklebt werden, zusätzlich oder alternativ dazu eine Oberflächenbehandlung aufweisen, die das Verkleben begünstigen, z. B. können die Flächen vollständig oder nur in einem Teilbereich aufgeraut sein. Jede Seitenfläche weist eine Erstreckung in Hoch- und Längsrichtung auf, jedoch nicht in Querrichtung.

Nach einer weiteren Ausführungsform ist das Tragprofil, das die Längsprofile und das Kernprofil aufweist, einstückig ausgeformt. Dabei sind das Kernprofil und die Längsprofile aus demselben FKV ausgeformt, z. B. aus CFK oder GFK. Aufgrund dieser einstückigen und somit integralen Ausformung des Tragprofils ist das Herstellungsverfahren vereinfacht und kostengünstig.

Nach einer weiteren Ausführungsform weist das Tragprofil an jedem seiner Verbindungsbereiche wenigstens einen Führungsabsatz auf. Dieser Führungsabsatz ist eine Materialverdickung in Längsrichtung der Achsstrebe und ist beispielsweise an dem Längsprofil angeordnet. Beispielsweise kann das erste Längsprofil einen Führungsabsatz an derjenigen Seitenfläche aufweisen, die vom Kernprofil weggewandt ist. Beispielsweise kann das erste Längsprofil alternativ oder zusätzlich dazu einen Führungsabsatz an derjenigen Seitenfläche aufweisen, die dem Kernprofil zugewandt ist. Alternativ oder zusätzlich dazu kann das zweite Längsprofil einen Führungsabsatz an derjenigen Seitenfläche aufweisen, die vom Kernprofil weggewandt ist. Alternativ oder zusätzlich dazu kann das zweite Längsprofil einen Führungsabsatz an derjenigen Seitenfläche aufweisen, die dem Kernprofil zugewandt ist.

Selbstverständlich kann das Tragprofil an jedem seiner Verbindungsbereiche mehr als einen Führungsabsatz aufweisen. Die Ausformung des wenigstens einen Führungsabsatzes ist vorzugsweise an jedem Verbindungsbereich des Tragprofils gleich, kann aber alternativ dazu auch verschieden voneinander sein.

Der wenigstens eine Führungsabsatz dient dazu, jeden Verbindungsbereich bei Herstellung der Klebeverbindung mit dem jeweiligen Lasteinleitelement genau zu positionieren. Bei der Verwendung der Achsstrebe in einem Fahrzeug ist es zur Übertragung der Kräfte, die in die Achsstrebe eingeleitet werden mittels der Lasteinleitelemente, vorteilhaft, die Abmessungen der Klebeverbindung zu definieren. Dies wird begünstigt durch den wenigstens einen Führungsabsatz. Vorzugsweise weist jeder Verbindungsbereich pro Klebeverbindung daher einen Führungsabsatz auf.

Nach einer weiteren Ausführungsform ist jede Klebeverbindung derart ausgebildet, dass diese entlang ihres Längsverlaufs wenigstens zwei unterschiedliche Klebstoffschichtstärken aufweist. Beispielsweise kann die Klebstoffschichtstärke an den Randbereichen der Lasteinleitelemente, die dem Tragprofil zugewandt sind, erhöht sein im Vergleich zu der Klebstoffschichtstärke im weiteren Längsverlauf der Klebeverbindung.

Eine erhöhte Klebstoffschichtstärke kann beispielsweise dadurch erreicht werden, dass die Aufnahme jedes Lasteinleitelements eine Vertiefung oder Einkerbung aufweist, so dass eine erhöhte Klebstoffschichtstärke an dieser Vertiefung oder Einkerbung ausgebildet ist.

Vorteilhaft daran ist, dass durch die Erhöhung der Klebstoffschichtstärke in vorbestimmten Bereichen der Klebeverbindung Spannungsspitzen zwischen dem Tragprofil und den Lasteinleitelementen reduziert werden, da bei einer erhöhten Klebstoffschichtstärke eine höhere Elastizität, Duktilität bzw. Bruchdehnung vorliegt. Die Kraftübertragung auf einer größeren Anbindungsfläche ist dadurch ermöglicht.

Nach einer weiteren Ausführungsform ist das Kernprofil aus einem GFK oder aus einem CFK ausgeformt. Das Kernprofil weist dabei vorzugsweise eine geringe Steifigkeit auf, z. B. ca. 14GPa.

Nach einer weiteren Ausführungsform sind die Längsprofile aus einem GFK oder aus einem CFK ausgeformt. Die Längsprofile weisen dabei vorzugsweise eine hohe Steifigkeit auf, die deutlich höher ist als die des Kernprofils. Die Faserverstärkung der beiden Längsprofile ist vorzugsweise unidirektional.

Nach einer weiteren Ausführungsform sind die Lasteinleitelemente aus Aluminium oder aus einem FKV ausgeformt. Sind die Lasteinleitelemente aus FKV ausgeformt, sind diese als Formpressteile aus FKV, z. B. SMC (carbonfaserverstärkt oder glasfaserverstärkt), ausgebildet. Vorteilhaft an einer Ausformung der Lasteinleitelemente aus FKV ist, dass diese eine verringerte Masse im Vergleich zur Ausformung aus einem metallischen Material aufweisen.

Nach einer weiteren Ausführungsform ist jede Klebeverbindung mittels eines elastischen Klebstoffs ausgebildet. Dieser elastische Klebstoff weist eine hohe Bruchdehnung auf im Gegensatz zu unelastischen Klebstoffen. Durch die Verwendung des elastischen Klebstoffs werden bei der Verwendung der Achsstrebe in einem Fahrzeug lokale Spannungsspitzen reduziert.

Nach einer weiteren Ausführungsform weist der erste Verbindungsbereich des Tragprofils einen stirnseitigen Abstand auf zu dem ersten Lasteinleitelement und der zweite Verbindungsbereich des Tragprofils weist einen weiteren stirnseitigen Abstand auf zu dem zweiten Lasteinleitelement. Das Tragprofil weist dabei eine erste und eine zweite Stirnseite auf. Die erste Stirnseite ist in Richtung des ersten Lasteinleitelements orientiert. Die zweite Stirnseite ist in Richtung des zweiten Lasteinleitelements orientiert. Die erste und die zweite Stirnseite sind dabei senkrecht zu der Längsachse der Achsstrebe.

Dies heißt, dass der erste Verbindungsbereich des Tragprofils derart mit dem ersten Lasteinleitelement verbunden ist, dass nur die Seitenflächenbereiche des Tragprofils, die ausgeformt sind durch die beiden Längsprofile, das erste Lasteinleitelement kontaktieren und mittels der Klebeverbindung mit diesem verbunden sind. An der Stirnseite des ersten Verbindungsbereichs des Tragprofils besteht keine Klebeverbindung mit dem ersten Lasteinleitelement. Es liegt in anderen Worten ein materialfreier Hohlraum oder Bereich vor, der nicht mit Klebstoff gefüllt ist.

Weiterhin ist der zweite Verbindungsbereich des Tragprofils derart mit dem zweiten Lasteinleitelement verbunden ist, dass nur die Seitenflächenbereiche des Tragprofils, die ausgeformt sind durch die beiden Längsprofile, das zweite Lasteinleitelement kontaktieren und mittels der Klebeverbindung mit diesem verbunden sind. An der Stirnseite des zweiten Verbindungsbereichs des Tragprofils besteht keine Klebeverbindung mit dem zweiten Lasteinleitelement. Es liegt in anderen Worten ein materialfreier Hohlraum oder Bereich vor, der nicht mit Klebstoff gefüllt ist.

Durch diesen stirnseitigen Abstand des Tragprofils zu den beiden Lasteinleitelementen wird bei der Verwendung der Achsstrebe in einem Fahrzeug sichergestellt, dass bei einer Lasteinleitung in die Achsstrebe über die Lasteinleitelemente, eine Kraftübertragung an das Tragprofil nur durch Schubspannung erfolgt. Weiterhin wird vermieden, dass das Tragprofil aufgrund der Lasteinleitung stirnseitig beschädigt wird.

Bei einem nicht beanspruchten Verfahren zur Herstellung einer Achsstrebe, die in der vorherigen Beschreibung beschrieben wurde, wird zuerst das Kernprofil gereinigt. Anschließend wird das erste Längsprofil mit der ersten Seitenfläche des Kernprofils verklebt und gleichzeitig oder in kurzem zeitlichen Abstand zueinander das zweite Längsprofil wird mit der zweiten Seitenfläche des Kernprofils verklebt, so dass das Tragprofil ausgebildet ist. Anschließend werden die zwei Lasteinleitelemente gereinigt. Die Aufnahme des ersten Lasteinleitelements wird daraufhin mit Klebstoff aufgefüllt zur Vorbereitung der Klebeverbindung und die Aufnahme des zweiten Lasteinleitelements wird mit Klebstoff aufgefüllt zur Vorbereitung der weiteren Klebeverbindung. Der erste Verbindungsbereich wird mit Klebstoff benetzt. Der zweite Verbindungsbereich wird ebenfalls mit Klebstoff benetzt. Der erste Verbindungsbereich des Tragprofils wird von der Aufnahme des ersten Lasteinleitelements aufgenommen und der zweite Verbindungsbereich des Tragprofils wird von der Aufnahme des zweiten Lasteinleitelements aufgenommen, wobei das Tragprofil ausgerichtet wird. Abschließend werden die Klebeverbindungen ausgehärtet.

Vorzugsweise werden die Längsprofile separat hergestellt und ausgehärtet. Die Längsprofile werden beispielsweise im Pultrusionsverfahren hergestellt. Vorzugsweise werden die Lasteinleitelemente im Strangpressverfahren hergestellt, wenn diese aus Aluminium oder FKV ausgeformt sind.

Durch das Herstellen der Längsprofile im Pultrusionsverfahren und durch das Herstellen der Lasteinleitelemente im Strangpressverfahren sind diese auf einfache und kostengünstige Art und Weise herzustellen. Zudem ist eine Modularisierbarkeit der Achsstrebe auf einfache Art und Weise gewährleistet.

Anhand der im Folgenden erläuterten Figuren werden verschiedene Ausführungsbeispiele und Details der Erfindung näher beschrieben. Es zeigen:
- Fig. 1: eine schematische Darstellung einer Achsstrebe nach einem Ausführungsbeispiel,
- Fig. 2: eine schematische Darstellung einer Achsstrebe nach einem weiteren Ausführungsbeispiel,
- Fig.3: eine schematische Darstellung des Tragprofils der Achsstrebe aus Fig. 2,
- Fig.4: eine schematische Darstellung eines ersten Verbindungsbereichs eines Tragprofils einer Achsstrebe und eine Vergrößerung eines Ausschnitts des Verbindungsbereichs nach einem Ausführungsbeispiel,
- Fig. 5: eine vergrößerte schematische Darstellung des Lasteinleitelements aus Fig. 1 (Vergrößerungsbereich A),
- Fig.6: eine schematische Darstellung eines Ausschnitts aus einer Achsstrebe mit einem Lager nach einem Ausführungsbeispiel,
- Fig.7: eine schematische Darstellung einer Achsstrebe nach einem weiteren Ausführungsbeispiel,
- Fig. 8: eine schematische Darstellung einer Achsstrebe nach einem weiteren Ausführungsbeispiel,
- Fig.9: eine schematische Darstellung einer Achsstrebe nach einem weiteren Ausführungsbeispiel,
- Fig. 10: eine schematische Darstellung eines Lasteinleitelements nach einem weiteren Ausführungsbeispiel,
- Fig. 11: eine schematische Darstellung eines Tragprofils nach einem weiteren Ausführungsbeispiel in zwei Ansichten.

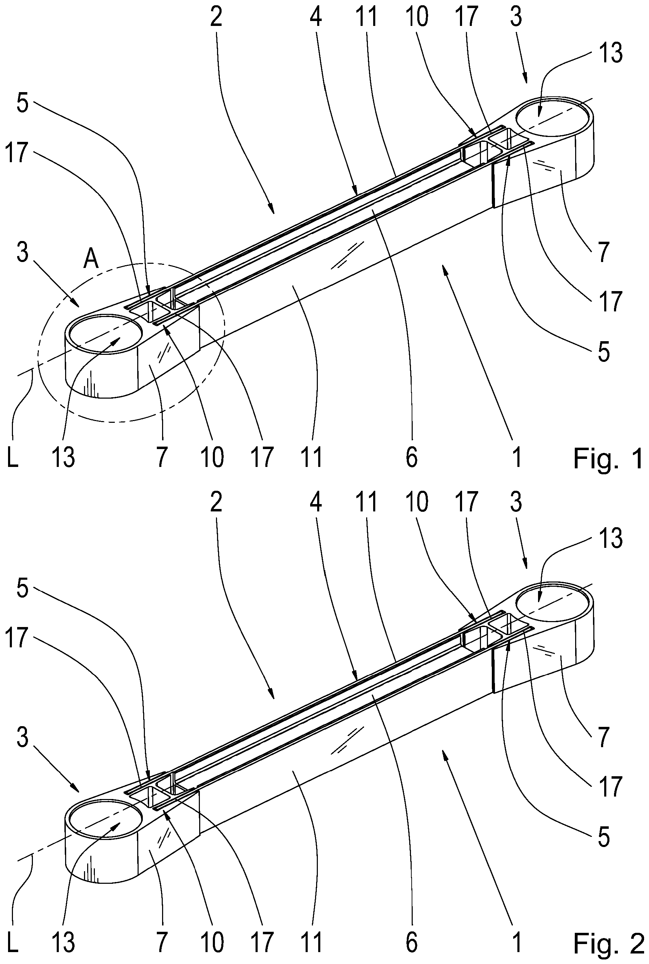

Fig. 1 zeigt eine schematische Darstellung einer Achsstrebe 1 nach einem Ausführungsbeispiel. Die Achsstrebe 1 weist zwei Lagerbereiche 3 und einen Schaft 2 auf. Die Achsstrebe erstreckt sich von einem ersten Lagerbereich 3 über den Schaft 2 zu einem zweiten Lagerbereich 3. Die Achsstrebe 1 ist ausgeformt aus einem Tragprofil 4 und aus zwei Lasteinleitelementen 7. Das Tragprofil 4 ist wiederum ausgeformt aus zwei Längsprofilen 11 und einem Kernprofil 6. Die Achsstrebe 1 weist zudem eine Längsachse L auf. Die Achsstrebe 1 ist zu dieser Längsachse L symmetrisch.

Das Tragprofil 4 weist das Kernprofil 6 auf, das vorzugsweise aus einem GFK ausgeformt ist. Weiterhin weist das Tragprofil 4 zwei Längsprofile 11 auf, die vorzugsweise aus einem CFK ausgeformt sind. Das Kernprofil 6 ist rohrförmig ausgestaltet und weist vorzugsweise einen H-förmigen oder einen doppel-H-förmigen Querschnitt auf. Weiterhin ist das Kernprofil 6 eben ausgestaltet. Die beiden Längsprofile 11 sind gleichförmig zueinander ausgeformt. Jedes Längsprofil 11 ist plattenförmig und eben ausgeformt. Die beiden Längsprofile 11 weisen eine längere Längserstreckung auf als das Kernprofil 6. Beide Längsprofile 11 weisen eine unidirektionale Faserverstärkung mit Ausrichtung in Längsrichtung der Achsstrebe 1 auf. Die Längsrichtung der Achsstrebe 1 wird durch die Längsachse L festgelegt.

Ein erstes Längsprofil 11 ist mit einer Seitenfläche des Kernprofils 6 verbunden. Ein zweites Längsprofil 11 ist mit einer weiteren Seitenfläche des Kernprofils 6 verbunden. Diese Verbindung ist derart, dass die erste Seitenfläche des Kernprofils 6 vollständig von dem ersten Längsprofil 11 bedeckt ist. Die zweite Seitenfläche des Kernprofils 6 ist vollständig von dem zweiten Längsprofil 11 bedeckt. Das heißt, das erste Längsprofil 11 kontaktiert die gesamte erste Seitenfläche des Kernprofils 6 und das zweite Längsprofil 11 kontaktiert die gesamte zweite Seitenfläche des Kernprofils 6. Beide Seitenflächen des Kernprofils 6 sind im Querschnitt des Kernprofils 6 die beiden Aufstriche des H- oder des Doppel-H.

Die beiden Längsprofile 11 sind derart ausgeformt, dass diese sowohl an dem dem ersten Lasteinleitelement 7 zugewandten Ende des Kernprofils 6, als auch an dem dem zweiten Lasteinleitelement 7 zugewandten Ende des Kernprofils 6 über die Länge des Kernprofils 6 hinausragen. Diese über das Kernprofil 6 hinausragenden Bereiche der beiden Längsprofile 11 formen einen ersten Verbindungsbereich 5 des Tragprofils 4 und einen zweiten Verbindungsbereich 5 des Tragprofils 4 aus. Der erste Verbindungsbereich 5 des Tragprofils 4 ist in Richtung des ersten Lasteinleitelements 7 orientiert. Der zweite Verbindungsbereich 5 des Tragprofils 4 ist in Richtung des zweiten Lasteinleitelements 7 orientiert.

Beide Lasteinleitelemente 7 weisen jeweils eine Aussparung 13 zur Aufnahme eines Lagers, beispielsweise eines Gummi-Metall-Lagers, auf. Diese Aussparungen 13 sind zylinderförmig ausgeformt. Weiterhin weist jedes Lasteinleitelement 7 eine Aufnahme 10 auf, die dazu geeignet ist, den jeweiligen Verbindungsbereich 5 des Tragprofils 4 aufzunehmen. Die Aufnahme 10 jedes Lasteinleitelements 7 ist in Form zweier Längsnuten 17 ausgeformt. Jede Nut 17 ist dabei derart ausgebildet, dass diese geeignet ist, denjenigen Abschnitt des jeweiligen Längsprofils 11 aufzunehmen, der den jeweiligen Verbindungsbereich 5 ausformt. Jede Längsnut 17 ist dabei derart ausgeformt, dass diese genug Raum für einen Klebstoff aufweist, so dass eine Klebeverbindung zwischen dem ersten Lasteinleitelement 7 und dem Tragprofil 4, sowie zwischen dem zweiten Lasteinleitelement 7 und dem Tragprofil 4 hergestellt werden kann.

Während eines Herstellungsverfahrens der Achsstrebe 1 wird jede Längsnut 17, die die Aufnahmen 10 ausformen, mit einem flüssigen elastischen Klebstoff gefüllt. Zudem werden der Abschnitt des ersten Längsprofils 11 und der Abschnitt des zweiten Längsprofils 11, die den ersten Verbindungsbereich 5 ausformen, und der Abschnitt des ersten Längsprofils 11 und der Abschnitt des zweiten Längsprofils 11, die den zweiten Verbindungsbereich 5 ausformen, in einer vordefinierten Schichtstärke mit Klebstoff benetzt bzw. eingestrichen. Anschließend wird der erste Verbindungsbereich 5 in die Aufnahme 10 des ersten Lasteinleitelements 7 gesteckt. Ebenso wird der zweite Verbindungsbereich 5 in die Aufnahme 10 des zweiten Lasteinleitelements gesteckt. Anschließend werden die so entstandenen Verbindungen ausgehärtet. Dadurch, dass die Nuten 17 vollständig mit Klebstoff gefüllt worden sind, wird durch einen Verdrängungsvorgang während des Einsteckens des Tragprofils 4 in die Aufnahmen 10 eine mögliche Luftblasenbildung, die zu Schädigungen führen kann, unterdrückt bzw. reduziert.

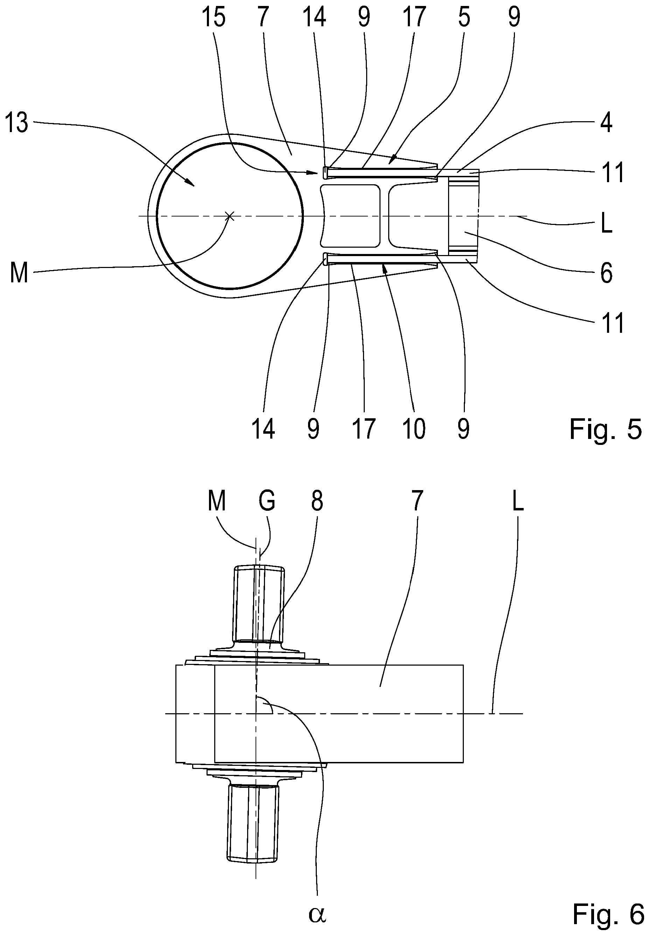

Außerdem ist in Fig. 1 ein Vergrößerungsbereich A eingezeichnet, der in Fig. 5 näher dargestellt ist.

Fig. 2 zeigt eine schematische Darstellung einer Achsstrebe 1 nach einem weiteren Ausführungsbeispiel. Diese Achsstrebe 1 weist, wie bereits die Achsstrebe in Fig. 1, zwei Lagerbereiche 3 und einen Schaft 2 auf. Wie bereits in Fig. 1 gezeigt, weist jedes Lasteinleitelement 7 eine mittels zweier Längsnuten 17 ausgeformte Aufnahme 10 auf. Die beiden Lasteinleitelemente 7, die hier in Fig. 2 dargestellt sind, sind ebenso ausgeformt wie die Lasteinleitelemente 7, die in Fig. 1 dargestellt sind. Auch die Verbindung zwischen den beiden Lasteinleitelementen 7 und dem Tragprofil 4 ist genauso wie in Fig. 1 bereits beschrieben.

Das Tragprofil 4 weist ein Kernprofil 6 und zwei Längsprofile 11 auf. Die Längsprofile 11 und das Kernprofil 6 weisen dieselbe geometrische Ausformung aus, wie bereits in Fig. 1 dargestellt. Jedoch sind beide Längsprofile 11 sowie das Kernprofil 6 aus demselben FKV, nämlich aus CFK, ausgeformt. Die Längsprofile 11 und das Kernprofil 6 werden in einem einzigen Verfahrensschritt einstückig hergestellt. Beide Längsprofile 11 weisen eine unidirektionale Faserverstärkung mit Ausrichtung in Längsrichtung der Achsstrebe 1 auf. Die Längsrichtung der Achsstrebe 1 wird durch die Längsachse L festgelegt.

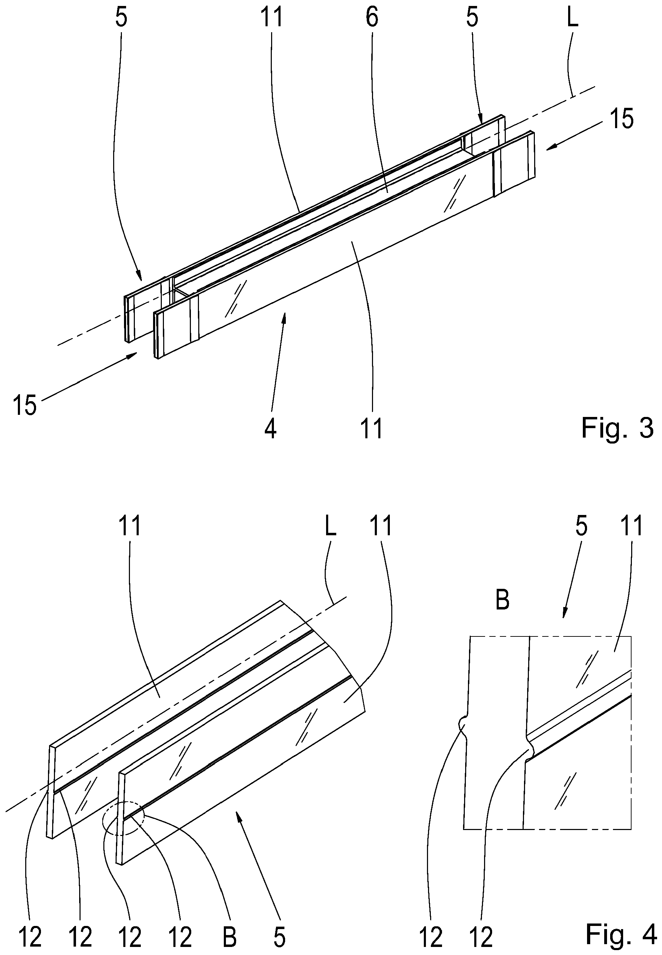

Fig. 3 zeigt eine schematische Darstellung des Tragprofils 4 der Achsstrebe 1 aus Fig. 2. Hierbei ist nochmals deutlich zu erkennen, dass das Tragprofil 4 einstückig ausgeformt ist, d.h., dass sowohl das Kernprofil 6 als auch die beiden Längsprofile 11 in einem einzigen Verfahrensschritt hergestellt worden sind, so dass das Tragprofil 4 entstanden ist. Das Kernprofil 6 und die beiden Längsprofile 11 bilden also ein einziges Bauelement aus. Weiterhin wurden eine erste Stirnseite 15 und eine zweite Stirnseite 15 des Tragprofils 4 eingezeichnet. Jedes Tragprofil 4 weist eine erste Stirnseite 15 und eine zweite Stirnseite 15 auf, unabhängig von der Ausgestaltung des Tragprofils 4 an sich.

Fig. 4 zeigt eine schematische Darstellung eines ersten Verbindungsbereichs 5 eines Tragprofils 4 der Achsstrebe 1 und eine Vergrößerung eines Ausschnitts des Verbindungsbereichs 5 nach einem Ausführungsbeispiel. Aufgrund der vergrößerten Darstellung ist nur der erste Verbindungsbereich 5 dargestellt, der von den beiden Längsprofilen 11 ausgeformt wird. Jedes Längsprofil 11 weist zwei Führungsabsätze 12 auf. Diese Führungsabsätze 12 erstrecken sich entlang der Längsrichtung der Achsstrebe. Diese Längsrichtung wird durch die Längsachse L festgelegt. Jeder Führungsabsatz 12 ist dabei ein Vorsprung an den jeweiligen Seitenflächen der Längsprofile 11. Die Führungsabsätze 12 ermöglichen beim Herstellen der Achsstrebe 1 eine exakte Positionierung des Tragprofils 4 innerhalb der mittels Nuten ausgeformten Aufnahmen 10. Dies ist vorteilhaft, da ein Klebespalt, der vordefinierte Abmessungen aufweist, zur Übertragung der Kräfte während eines Lastfalls bei der Verwendung der Achsstrebe 1 in einem Fahrzeug nötig ist.

Fig. 5 zeigt eine vergrößerte schematische Darstellung des Lasteinleitelements 7 aus Fig. 1 im Vergrößerungsbereich A. Deutlich zu erkennen ist, dass die Aufnahme 10 des Lasteinleitelements 4 ausgeformt ist mittels zweier Längsnuten 17. Jede Nut 17 ist dabei derart ausgeformt, dass zusätzlich zu dem Abschnitt des ersten Längsprofils 11 und zu dem Abschnitt des zweiten Längsprofils 11, die den Verbindungsbereich 5 ausformen, eine Klebeschicht 9 auf beiden Seiten der jeweiligen Längsprofilabschnitte 11 in der Nut 17 Platz findet. Die Klebeverbindungen 9 sind dabei derart ausgestaltet, dass die Dicke der Klebstoffschicht entlang der Längserstreckung der Klebverbindung 9 variiert. Hier ist die Klebstoffschichtstärke direkt am Eintrittsbereich der Aufnahmen 10 erhöht. Zudem ist die Klebstoffschichtstärke an den jeweiligen Nutenden erhöht. Dies wird dadurch erreicht, dass die Längsnuten 17 an diesen Stellen jeweils eine Vertiefung aufweisen, so dass eine dickere Klebstoffschichtstärke erreicht werden kann. Vorteilhaft an der Erhöhung der Klebstoffschichtstärke ist es, dass Spannungsspitzen zwischen dem Tragprofil 4 und den Lasteinleitelementen 7 vermieden werden.

Weiterhin ist deutlich zu erkennen, dass an der Stirnseite 15 des Tragprofils 4 ein Abstand zwischen dem Tragprofil 4 und dem Lasteinleitelement 7 vorliegt. In jeder Nut 17 liegt ein Abstand 14 vor. Dieser Abstand 14 ist vollständig frei von Klebstoff oder anderem Material. Aufgrund dieses stirnseitigen Abstands 14 erfolgt bei einem Lastfall der Achsstrebe 1 bei der Verwendung der Achsstrebe 1 in einem Fahrzeug eine Kraftübertragung zwischen dem Lasteinleitelement 7 und dem Tragprofil 4 nur mittels Schubspannung.

Fig. 6 zeigt eine schematische Darstellung eines Ausschnitts aus einer Achsstrebe 1 mit einem Lager 8 nach einem Ausführungsbeispiel. Dargestellt ist lediglich ein Lasteinleitelement 7, mit dem das Lager 8 verbunden ist. Das Lager 8 ist ein Elastomerlager. Hier dargestellt ist das Lager 8 bewegt, so dass die Mittelachse M der Aussparung 13 des Lasteinleitelements 7 nicht koaxial ist zu der Lagerachse G, so dass ein Winkel α zwischen der Lagerachse G und der Längsachse L entstanden ist. Die Lagerachse G ist somit nicht senkrecht auf der Längsachse L. Die Mittelachse M ist jedoch senkrecht auf der Längsachse L.

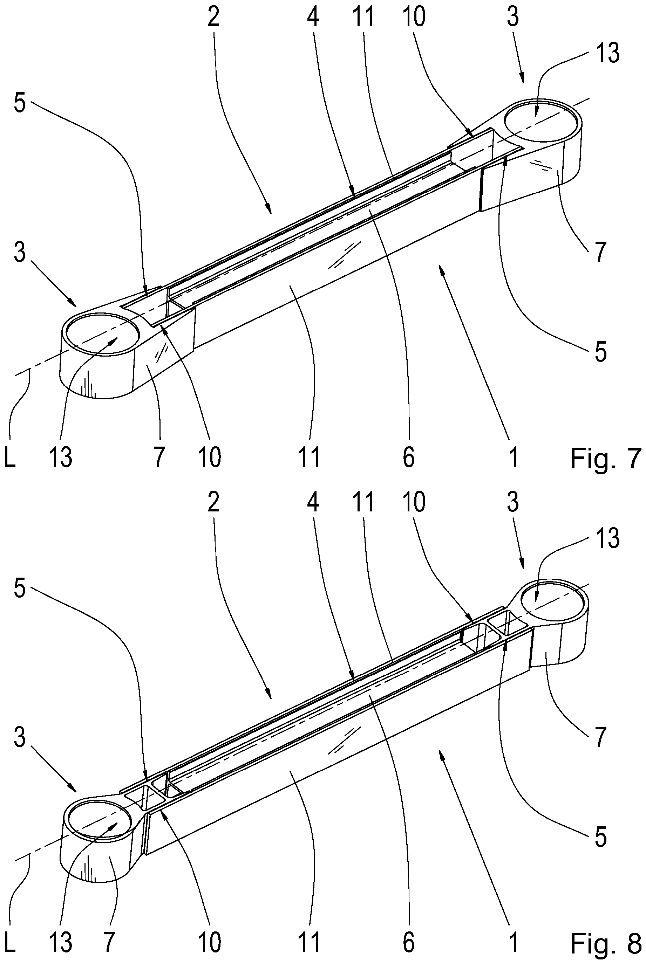

Fig. 7 zeigt eine schematische Darstellung einer Achsstrebe 1 nach einem weiteren Ausführungsbeispiel. Die Achsstrebe 1 weist zwei Lagerbereiche 3 und einen Schaft 2 auf. Die Achsstrebe 1 ist ausgeformt aus zwei Lasteinleitelementen 7 und einem Tragprofil 4. Das Tragprofil 4 ist ausgeformt aus zwei Längsprofilen 11 und einem Kernprofil 6.

Das Tragprofil 4 ist hierbei ebenso ausgeformt wie bereits in Fig. 1 beschrieben. Die beiden Lasteinleitelemente 7 sind jedoch im Vergleich zu Fig. 1 bis Fig. 6 anders ausgeformt. Die Aufnahme 10 des ersten Lasteinleitelements 7 ist hierbei als breite Längsnut 17 ausgeformt. Ebenso ist die Aufnahme 10 des zweiten Lasteinleitelements 7 als breite Längsnut 17 ausgeformt. Diese beiden Längsnuten 17 sind ebenso breit wie das Tragprofil 4. Die Breite ist dabei in diejenige Richtung orientiert, die senkrecht ist zu der Längsrichtung, die durch die Längsachse L festgelegt ist, und senkrecht zu einer Hochrichtung, die durch die Mittelachse M der Aussparungen 13 festgelegt ist. Die Aufnahme 10 des ersten Lasteinleitelements 7 ist also derart ausgeformt, dass der erste Verbindungsbereich 5 des Tragprofils 4 vollständig in diese Nut hineingesteckt werden kann. Genauso ist die Aufnahme 10 des zweiten Lasteinleitelements 7 derart ausgeformt, dass der gesamte zweite Verbindungsbereich 5 des Tragprofils 4 von dieser Aufnahme 10 aufgenommen werden kann.

Bei der Herstellung der Achsstrebe 10 wird im Vergleich zu den Fig. 1 bis Fig. 6 nicht die gesamte Längsnut 17 mit Klebstoff aufgefüllt. Vielmehr ist die Klebeverbindung nur einschnittig ausgeführt, d.h., dass der Bereich des ersten Längsprofils 11, der den ersten Verbindungsbereich 5 ausformt, nur an einer Seite mit Klebstoff benetzt ist, nämlich an derjenigen Seite, die das Lasteinleitelement 7 kontaktiert. Ebenso ist der Bereich des zweiten Längsprofils 11, der den ersten Verbindungsbereich 5 ausformt, nur an derjenigen Seite mit Klebstoff benetzt, der das erste Lasteinleitelement 7 kontaktiert. Dies ist beim zweiten Lasteinleitelement 7 genauso. Diese einschnittige Ausformung der Klebeverbindung ist besonders vorteilhaft für Achsstreben 1 mit geringer Belastung.

Fig. 8 zeigt eine schematische Darstellung einer Achsstrebe 1 nach einem weiteren Ausführungsbeispiel. Diese Achsstrebe 1 weist einen Schaft 2 und zwei Lagerbereiche 3 auf. Die Achsstrebe 1 ist ausgeformt aus einem Tragprofil 4 und zwei Lasteinleitelementen 7. Das Tragprofil 4 ist ebenso ausgeformt wie bereits in Fig. 1 beschrieben.

Im Gegensatz dazu sind die beiden Lasteinleitelemente 7 anders ausgeformt als in Fig. 1 bis Fig. 7. Jedes Lasteinleitelement 7 weist eine Aufnahme 10 für die jeweiligen Verbindungsbereiche 5 des Tragprofils 4 auf. Die Aufnahme 10 des ersten Lasteinleitelements 7 ist als Fügebereich einer Mantelfläche des ersten Lasteinleitelements 7 ausgeformt. Die Aufnahme 10 des zweiten Lasteinleitelements 7 ist als ein Fügebereich der Mantelfläche des zweiten Lasteinleitelements ausgeformt. Ein Fügebereich ist dabei eine Fläche des Lasteinleitelements 7, die kontaktiert wird von dem jeweiligen Verbindungsbereich 5 des Tragprofils 4. Dieser Fügebereich, der die Aufnahme 10 des ersten Lasteinleitelements 7 und der Fügebereich, der die Aufnahme 10 des zweiten Lasteinleitelements 7 ausformt, kann vorzugsweise eine Oberflächenbehandlung aufweisen, die eine Klebeverbindung zwischen dem Tragprofil 4 und den beiden Lasteinleitelementen 7 begünstigt.

Der erste Verbindungsbereich 5 des Tragprofils 4 ist mit dem ersten Lasteinleitelement 7 an dessen Aufnahme 10 verklebt. Der zweite Verbindungsbereich 5 ist mit dem zweiten Lasteinleitelement 7 an deren Aufnahme 10 verklebt. Es liegen also einschnittige Klebeverbindungen vor. Das erste Längsprofil 11 ist also von außen auf das erste Lasteinleitelement 7 und das zweite Lasteinleitelement 7 geklebt. Das zweite Längsprofil 11 ist ebenso von außen auf das erste Lasteinleitelement 7 und das zweite Lasteinleitelement 7 geklebt. Die in Fig. 8 dargestellte Achsstrebe 1 eignet sich daher besonders für geringe Belastungen.

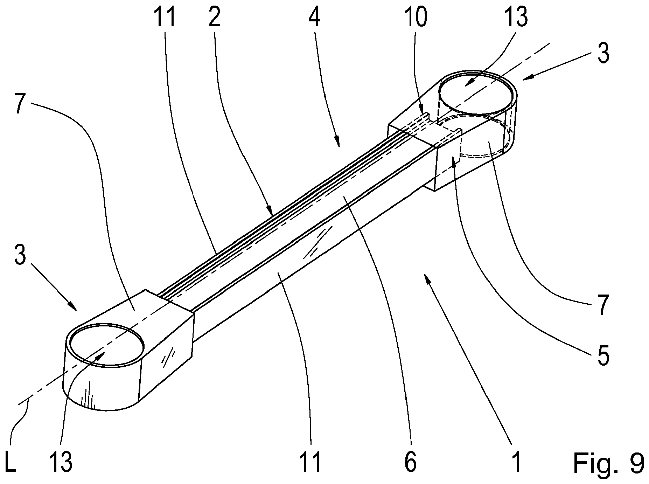

Fig. 9 zeigt eine schematische Darstellung einer Achsstrebe 1 nach einem Ausführungsbeispiel. Die Achsstrebe 1 weist zwei Lagerbereiche 3 und einen Schaft 2 auf. Die Achsstrebe 1 ist ausgeformt aus zwei Lasteinleitelementen 7 und einem Tragprofil 4. Das Tragprofil 4 formt den Schaft der Achsstrebe 1 aus, die beiden Lasteinleitelemente 7 formen die beiden Lagerbereiche 3 der Achsstrebe 1 aus. Die Achsstrebe 1 weist eine Längsachse L auf.

Das Tragprofil 4 ist ausgeformt aus einem Kernprofil 6 und zwei Längsprofilen 11. Das Kernprofil 6 ist ebenso ausgeformt wie bereits in Fig. 2 beschrieben. Die Längsprofile 11 sind ähnlich wie in Fig. 1 und Fig. 2 ausgeformt. Jedoch weisen die Längsprofile 11 dieselbe Längserstreckung auf wie das Kernprofil 6. Die beiden Längsprofile 11 sowie das Kernprofil 6 sind also gleich lang. Die Längsprofile 11 und das Kernprofil 6 sind aus CFK ausgeformt. Weiterhin ist das Tragprofil 4 mit den beiden Längsprofilen 11 und dem Kernprofil 6 einstückig ausgeformt.

Die beiden Lasteinleitelemente 7 weisen jeweils eine Aussparung 13 für ein Lager auf. Diese Aussparung 13 ist zylinderförmig ausgeformt. Jedes Lasteinleitelement 7 weist eine Aufnahme 10 für den jeweiligen Verbindungsbereich 5 des Tragprofils 4 auf. Die Aufnahme 10 jedes Lasteinleitelements 7 ist dabei als Passung ausgeformt. Diese Passung ist jeweils so ausgestaltet, dass diese geeignet ist, den jeweiligen Verbindungsbereich 5 des Tragprofils 4 vollständig aufzunehmen. Der erste Verbindungsbereich des Tragprofils 4 wird also in die Passung, die die Aufnahme 10 des ersten Lasteinleitelements 7 ausformt, hineingesteckt. Ebenso wird der zweite Verbindungsbereich 5 in die Passung, die die Aufnahme 10 des zweiten Lasteinleitelements 7 ausformt, hineingesteckt. Die beiden Lasteinleitelemente 7 sind in derselben horizontalen Ebene angeordnet. Somit ist die Achsstrebe 1 eben ausgeformt. Das Tragprofil 4 ist hierbei vorzugsweise rohrförmig ausgeformt. Das Tragprofil 4 weist dabei einen rechteckigen Querschnitt auf.

Im Herstellungsverfahren wird jede Aufnahme 10 vollständig mit Klebstoff gefüllt, so dass bei einem Einstecken des Tragprofils 4 in die jeweiligen Aufnahmen 10 eine Klebeverbindung zwischen dem Tragprofil 4 und dem ersten Lasteinleitelement 7 sowie dem zweiten Lasteinleitelement 7 entsteht. Vorteilhaft hieran ist die einfache Modularisierbarkeit der Achsstrebe 1.

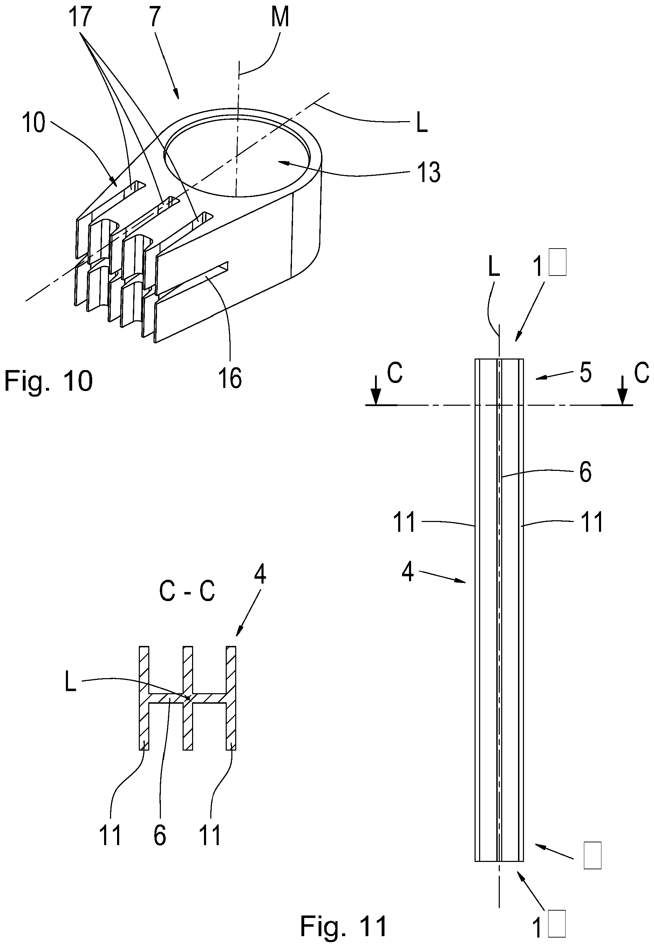

Fig. 10 zeigt eine schematische Darstellung eines Lasteinleitelements 7 nach einem weiteren Ausführungsbeispiel. Das Lasteinleitelement 7 weist eine Aussparung 13 zur Aufnahme eines Lagers, beispielsweise eines Gummi-Metall-Lagers, auf. Diese Aussparung 13 ist zylinderförmig ausgeformt. Das Lasteinleitelement 7 ist vorzugsweise aus einem metallischen Material, z. B. Aluminium ausgeformt mittels Strangpressverfahren. Alternativ kann das Lasteinleitelement 7 mittels Strangpressverfahren aus einem FKV ausgeformt sein.

Weiterhin weist das Lasteinleitelement 7 eine Aufnahme 10 auf, die dazu geeignet ist, den jeweiligen Verbindungsbereich 5 des Tragprofils 4 aufzunehmen. Die Aufnahme 10 des Lasteinleitelements 7 ist in Form dreier Längsnuten 17 und einer Quernut 16 ausgeformt. Die drei Längsnuten 17 sind parallel zueinander und parallel zu der Längsachse L. Die Quernut ist senkrecht zu der Längsachse L und zu den drei Längsnuten. Die Längsnuten 17 sind äquidistant zueinander. Die Quernut 16 weist zu jeder Deckfläche des Lasteinleitelements 7 denselben Abstand auf. Die Quernut 16 weist dieselbe Längserstreckung auf wie die drei Längsnuten 17. Das Lasteinleitelement 7 ist derart ausgeformt, dass ein Spannungsverlauf in dem Lasteinleitelement 7 bei einem auftretenden Lastfall möglichst optimal ist.

Jede Längsnut 17 und die Quernut 16 sind dabei derart ausgebildet, dass diese geeignet ist, denjenigen Abschnitt des Tragprofils 4 aufzunehmen, der den jeweiligen Verbindungsbereich 5 ausformt. Jede Längsnut 17 und die Quernut 16 sind dabei derart ausgeformt, dass diese genug Raum für einen Klebstoff aufweist, so dass eine Klebeverbindung zwischen dem Lasteinleitelement 7 und dem Tragprofil 4, hergestellt werden kann.

Während eines Herstellungsverfahrens der Achsstrebe 1 werden zwei der hier dargestellten Lasteinleitelemente 7 benötigt. Es werden die Quernut 16 und jede Längsnut 17, die die Aufnahmen 10 ausformen, mit einem flüssigen elastischen Klebstoff gefüllt. Zudem werden der Abschnitt des Tragprofils 4, der den ersten Verbindungsbereich 5 ausformt, und der Abschnitt des Tragprofils 4, der den zweiten Verbindungsbereich 5 ausformt, in einer vordefinierten Schichtstärke mit Klebstoff benetzt bzw. eingestrichen. Anschließend wird der erste Verbindungsbereich 5 in die Aufnahme 10 eines ersten Lasteinleitelements 7 gesteckt. Ebenso wird der zweite Verbindungsbereich 5 in die Aufnahme 10 eines zweiten Lasteinleitelements gesteckt.

Anschließend werden die so entstandenen Verbindungen ausgehärtet. Dadurch, dass die Nuten 16, 17 vollständig mit Klebstoff gefüllt worden sind, wird durch einen Verdrängungsvorgang während des Einsteckens des Tragprofils 4 in die Aufnahmen 10 eine mögliche Luftblasenbildung, die zu Schädigungen führen kann, unterdrückt bzw. reduziert.

Fig. 11 zeigt eine schematische Darstellung eines Tragprofils 4 nach einem weiteren Ausführungsbeispiel in zwei Ansichten. Es ist eine Draufsicht des Tragprofils 4 und eine Schnittansicht des Tragprofils 4 entlang der Schnittlinie C-C gezeigt. Das Tragprofil 4 weist ein Kernprofil 6 und zwei Längsprofile 11 auf. Das Kernprofil 6 weist einen plusförmigen Querschnitt auf. Die beiden Längsprofile 11 weisen einen rechteckigen Querschnitt auf. Beide Längsprofile 11 sind gleichförmig zueinander ausgeformt.

Das Kernprofil 6 und die beiden Längsprofile 11 sind aus demselben Material, z. B. aus GFK oder CFK ausgeformt. Das Tragprofil 4 ist einstückig ausgeformt. Das Kernprofil 6 und die beiden Längsprofile 11 sind also im selben Verfahrensschritt ausgeformt. Die beiden Längsprofile 11 und das Kernprofil 6 weisen in Hochrichtung dieselbe Erstreckung auf. Die Hochrichtung ist senkrecht zur Längsrichtung, die durch die Längsachse L festgelegt ist, und senkrecht zu einer Querrichtung, die der Schnittlinie C-C entspricht. Die Längsprofile 11 und das Kernprofil 6 sind in Längsrichtung gleich lang erstreckt.

In der Draufsicht ist deutlich zu erkennen, dass das Tragprofil 4 eine erste Stirnseite 15 und eine zweite Stirnseite 15 aufweist. Zudem weist das Tragprofil 4 einen ersten Verbindungsbereich 5 und einen zweiten Verbindungsbereich 5 auf, die dazu geeignet sein, mit den Lasteinleitelementen 7 verbunden zu werden. Bei der Verbindung des Tragprofils 4 mit den beiden Lasteinleitelementen 7, die in Fig. 10 dargestellt sind, werden die beiden Längsprofile 11 in die äußeren Längsnuten 17 der Lasteinleitelemente 7 gesteckt. Das Kernprofil 6 wird in die mittlere Längsnut 17 und in die Quernut 16 der Lasteinleitelemente 7 gesteckt. Die beiden Lasteinleitelemente 7 werden mittels einer Klebeverbindung mit dem Tragprofil 4 verklebt, was bereits unter Fig. 10 beschrieben wurde.

Die hier dargestellten Beispiele sind nur beispielhaft gewählt. Die dargestellte Achsstrebe kann in Ihrer Größe so variiert werden, dass diese in einem NKW verwendet werden kann. Alternativ dazu kann die Achsstrebe in Ihrer Größe so variiert werden, dass diese in einem PKW verwendet werden kann. Die Achsstrebe kann in der vorgeschlagenen Bauweise als Koppelstange, Pendelstütze oder Stabilisatorstange genutzt werden.

### Bezugszeichen

- 1: Achsstrebe
- 2: Schaft
- 3: Lagerbereich
- 4: Tragprofil
- 5: Verbindungsbereich
- 6: Kernprofil
- 7: Lasteinleitelement
- 8: Lager
- 9: Klebeverbindung
- 10: Aufnahme
- 11: Längsprofil
- 12: Führungsabsatz
- 13: Aussparung
- 14: Abstand
- 15: Stirnseite
- 16: Quernut
- 17: Längsnut
- L: Längsachse
- M: Mittelachse
- G: Lagerachse
- α: Winkel
- A: Vergrößerungsbereich
- B: Vergrößerungsbereich
- C-C: Schnittbereich

## Patentansprüche

1. Achsstrebe (1) für ein Fahrzeug, umfassend einen Schaft (2) und zwei Lagerbereiche (3), wobei die Achsstrebe (1) ein Tragprofil (4) und zwei Lasteinleitelemente (7) aufweist, wobei das Tragprofil (4) aus Faserkunststoffverbundmaterial ausgebildet ist, und wobei ein erstes Lasteinleitelement (7) an einem ersten Lagerbereich (3) der zwei Lagerbereiche (3) angeordnet ist, ein zweites Lasteinleitelement (7) an einem zweiten Lagerbereich (3) der zwei Lagerbereiche (3) angeordnet ist und das Tragprofil (4) an dem Schaft (2) räumlich zwischen den beiden Lagerbereichen (3) angeordnet ist, wobei das Tragprofil (4) einen ersten Verbindungsbereich (5), der dem ersten Lagerbereich (3) zugewandt ist, und einen zweiten Verbindungsbereich (5), der dem zweiten Lagerbereich (3) zugewandt ist, aufweist, wobei jedes Lasteinleitelement (7) eine zylinderförmige Aussparung (13) zur Aufnahme eines Lagers und eine Aufnahme (10) aufweist, wobei das Tragprofil (4) mittels seines ersten Verbindungsbereichs (5) und mittels der Aufnahme (10) des ersten Lasteinleitelements (7) durch eine Klebeverbindung (9) mit dem ersten Lasteinleitelement (7) verbunden ist, und wobei das Tragprofil (4) mittels seines zweiten Verbindungsbereichs (5) und mittels der Aufnahme (10) des zweiten Lasteinleitelements (7) durch eine weitere Klebeverbindung (9) mit dem zweiten Lasteinleitelement (7) verbunden ist, wobei das Tragprofil (4) ausgeformt ist aus einem Kernprofil (6) und zwei Längsprofilen (11), wobei die Längsprofile (11) derart mit dem Kernprofil (6) verbunden sind, dass ein erstes der Längsprofile (11) eine erste Seitenfläche des Kernprofils (6), die parallel ist zu einer Längsachse (L) der Achsstrebe (1), vollständig bedeckt, und dass ein zweites der Längsprofile (11) eine zweite Seitenfläche des Kernprofils (6), die parallel ist zu der Längsachse (L) der Achsstrebe (1) und parallel zu der ersten Seitenfläche, vollständig bedeckt, wobei die Längsprofile (11) die Verbindungsbereiche (5) aufweisen, **dadurch gekennzeichnet, dass** die Aufnahme (10) jedes Lasteinleitelements (7) ausgeformt ist als drei Längsnuten (17) und eine zu diesen senkrechte Quernut (16), welche dieselbe Längserstreckung wie die drei Längsnuten (17) aufweist und zu jeder Deckfläche des Lasteinleitelements (7) denselben Abstand aufweist, wobei die Nuten (16, 17) innerhalb des jeweiligen Lasteinleitelements (7) ausgeformt und dabei so ausgebildet sind, dass sie den jeweiligen Verbindungsbereich (5) des Tragprofils (4) aufnehmen können, wobei die drei Längsnuten (17) parallel zueinander und parallel zu der Längsachse (L) sowie äquidistant zueinander sind, wobei jede Längsnut (17) und die Quernut (16) derart ausgebildet sind, dass diese geeignet ist, denjenigen Abschnitt des Tragprofils (4) aufzunehmen, der den jeweiligen Verbindungsbereich (5) ausformt, und wobei jede Längsnut (17) und die Quernut (16) derart ausgeformt sind, dass diese genug Raum für einen Klebstoff aufweist, so dass eine Klebeverbindung zwischen dem Lasteinleitelement (7) und dem Tragprofil (4) hergestellt werden kann.

2. Achsstrebe (1) nach Anspruch 1, **dadurch gekennzeichnet, dass** die Längsprofile (11) mit dem Kernprofil (6) verklebt sind.

3. Achsstrebe (1) nach Anspruch 1, **dadurch gekennzeichnet, dass** das Tragprofil (4), das die Längsprofile (11) und das Kernprofil (6) aufweist, einstückig ausgeformt ist.

4. Achsstrebe (1) nach Anspruch 1 oder 3, **dadurch gekennzeichnet, dass** jede Klebeverbindung (9) derart ausgebildet ist, dass diese entlang ihres Längsverlaufs wenigstens zwei unterschiedliche Klebstoffschichtstärken aufweist.

5. Achsstrebe (1) nach einem der vorherigen Ansprüche, **dadurch gekennzeichnet, dass** das Tragprofil (4) an jedem seiner Verbindungsbereiche (5) wenigstens einen Führungsabsatz (12) aufweist.

6. Achsstrebe (1) nach einem der Ansprüche 1 bis 5, **dadurch gekennzeichnet, dass** das Kernprofil (6) aus einem glasfaserverstärkten Kunststoffverbundmaterial oder aus einem carbonfaserverstärkten Kunststoffverbundmaterial ausgeformt ist.

7. Achsstrebe (1) nach einem der Ansprüche 1 bis 6, **dadurch gekennzeichnet, dass** die Längsprofile (11) aus einem glasfaserverstärkten Kunststoffverbundmaterial oder aus einem carbonfaserverstärkten Kunststoffverbundmaterial ausgeformt sind.

8. Achsstrebe (1) nach einem der vorherigen Ansprüche, **dadurch gekennzeichnet, dass** die Lasteinleitelemente (7) aus Aluminium oder aus einem Faserkunststoffverbundmaterial ausgeformt sind.

9. Achsstrebe (1) nach einem der vorherigen Ansprüche, **dadurch gekennzeichnet, dass** jede Klebeverbindung (9) mittels eines elastischen Klebstoffs ausgebildet ist.

10. Achsstrebe (1) nach einem der vorherigen Ansprüche, **dadurch gekennzeichnet, dass** der erste Verbindungsbereich (5) des Tragprofils (4) einen stirnseitigen Abstand (14) aufweist zu dem ersten Lasteinleitelement (7) und dass der zweite Verbindungsbereich (5) des Tragprofils (4) einen weiteren stirnseitigen Abstand (14) aufweist zu dem zweiten Lasteinleitelement (7).

## Claims

1. Axle strut (1) for a vehicle, comprising a shank (2) and two bearing regions (3), wherein the axle strut (1) has a supporting profile (4) and two load-introducing elements (7), wherein the supporting profile (4) is formed from fibre plastics composite material, and wherein a first load-introducing element (7) is arranged at a first bearing region (3) of the two bearing regions (3), a second load-introducing element (7) is arranged at a second bearing region (3) of the two bearing regions (3), and the supporting profile (4) is arranged on the shank (2) spatially between the two bearing regions (3), wherein the supporting profile (4) has a first connecting region (5) which faces the first bearing region (3), and a second connecting region (5) which faces the second bearing region (3), wherein each load-introducing element (7) has a cylindrical cutout (13) for receiving a bearing, and a receptacle (10), wherein the supporting profile (4) is connected by means of its first connecting region (5) and by means of the receptacle (10) of the first load-introducing element (7) to the first load-introducing element (7) by an adhesive connection (9), and wherein the supporting profile (4) is connected by means of its second connecting region (5) and by means of the receptacle (10) of the second load-introducing element (7) to the second load-introducing element (7) by a further adhesive connection (9), wherein the supporting profile (4) is formed from a core profile (6) and two longitudinal profiles (11), wherein the longitudinal profiles (11) are connected to the core profile (6) in such a manner that a first of the longitudinal profiles (11) completely covers a first side surface of the core profile (6), which side surface is parallel to a longitudinal axis (L) of the axle strut (1), and that a second of the longitudinal profiles (11) completely covers a second side surface of the core profile (6), which side surface is parallel to the longitudinal axis (L) of the axle strut (1) and parallel to the first side surface, wherein the longitudinal profiles (11) have the connecting regions (5), **characterized in that** the receptacle (10) of each load-introducing element (7) is formed as three longitudinal grooves (17) and a transverse groove (16) which is perpendicular thereto and which has the same longitudinal extent as the three longitudinal grooves (17) and is at the same distance from each top surface of the load-introducing element (7), wherein the grooves (16, 17) are formed within the respective load-introducing element (7) and are configured in such a manner that they can receive the respective connecting region (5) of the supporting profile (4), wherein the three longitudinal grooves (17) are parallel to one another and parallel to the longitudinal axis (L) and are equidistant from one another, wherein each longitudinal groove (17) and the transverse groove (16) are configured in such a manner that they are suitable for receiving that portion of the supporting profile (4) which forms the respective connecting region (5), and wherein each longitudinal groove (17) and the transverse groove (16) are formed in such a manner that they have sufficient space for an adhesive, and therefore an adhesive connection can be produced between the load-introducing element (7) and the supporting profile (4) .

2. Axle strut (1) according to Claim 1, **characterized in that** the longitudinal profiles (11) are adhesively bonded to the core profile (6).

3. Axle strut (1) according to Claim 1, **characterized in that** the supporting profile (4) which has the longitudinal profiles (11) and the core profile (6) is formed integrally.

4. Axle strut (1) according to Claim 1 or 3, **characterized in that** each adhesive connection (9) is configured in such a manner that it has at least two different adhesive layer thicknesses along its longitudinal profile.

5. Axle strut (1) according to one of the preceding claims, **characterized in that** the supporting profile (4) has at least one guide step (12) at each of its connecting regions (5).

6. Axle strut (1) according to one of Claims 1 to 5, **characterized in that** the core profile (6) is formed from a glass-fibre-reinforced plastics composite material or from a carbon-fibre-reinforced plastics composite material.

7. Axle strut (1) according to one of Claims 1 to 6, **characterized in that** the longitudinal profiles (11) are formed from a glass-fibre-reinforced plastics composite material or from a carbon-fibre-reinforced plastics composite material.

8. Axle strut (1) according to one of the preceding claims, **characterized in that** the load-introducing elements (7) are formed from aluminium or from a fibre plastics composite material.

9. Axle strut (1) according to one of the preceding claims, **characterized in that** each adhesive connection (9) is formed by means of an elastic adhesive.

10. Axle strut (1) according to one of the preceding claims, **characterized in that** the first connecting region (5) of the supporting profile (4) is at an end-side distance (14) from the first load-introducing element (7), and **in that** the second connecting region (5) of the supporting profile (4) is at a further end-side distance (14) from the second load-introducing element (7).

## Revendications

1. Jambe de force d'essieu (1) pour un véhicule, comprenant une tige (2) et deux zones de palier (3), la jambe de force d'essieu (1) comprenant un profilé porteur (4) et deux éléments d'introduction de charge (7), le profilé porteur (4) étant formé en un matériau composite de fibres-matière plastique, et un premier élément d'introduction de charge (7) étant agencé sur une première zone de palier (3) parmi les deux zones de palier (3), un deuxième élément d'introduction de charge (7) étant agencé sur une deuxième zone de palier (3) parmi les deux zones de palier (3) et le profilé porteur (4) étant agencé sur la tige (2) spatialement entre les deux zones de palier (3), le profilé porteur (4) comprenant une première zone de liaison (5), qui est tournée vers la première zone de palier (3), et une deuxième zone de liaison (5), qui est tournée vers la deuxième zone de palier (3), chaque élément d'introduction de charge (7) comprenant un évidement de forme cylindrique (13) pour le logement d'un palier et un logement (10), le profilé porteur (4) étant relié au premier élément d'introduction de charge (7) au moyen de sa première zone de liaison (5) et au moyen du logement (10) du premier élément d'introduction de charge (7) par une liaison adhésive (9), et le profilé porteur (4) étant relié au deuxième élément d'introduction de charge (7) au moyen de sa deuxième zone de liaison (5) et au moyen du logement (10) du deuxième élément d'introduction de charge (7) par une autre liaison adhésive (9), le profilé porteur (4) étant formé d'un profilé de noyau (6) et de deux profilés longitudinaux (11), les profilés longitudinaux (11) étant reliés au profilé de noyau (6) de telle sorte qu'un premier des profilés longitudinaux (11) recouvre entièrement une première surface latérale du profilé de noyau (6), qui est parallèle à un axe longitudinal (L) de la jambe de force d'essieu (1), et de telle sorte qu'un deuxième des profilés longitudinaux (11) recouvre entièrement une deuxième surface latérale du profilé de noyau (6), qui est parallèle à l'axe longitudinal (L) de la jambe de force d'essieu (1) et parallèle à la première surface latérale, les profilés longitudinaux (11) comprenant les zones de liaison (5), **caractérisée en ce que** le logement (10) de chaque élément d'introduction de charge (7) est formé sous la forme de trois rainures longitudinales (17) et d'une rainure transversale (16) perpendiculaire à celles-ci, qui présente la même étendue longitudinale que les trois rainures longitudinales (17) et présente le même écart par rapport à chaque surface de recouvrement de l'élément d'introduction de charge (7), les rainures (16, 17) étant formées à l'intérieur de l'élément d'introduction de charge respectif (7) et étant configurées de telle sorte qu'elles peuvent loger la zone de liaison respective (5) du profilé porteur (4), les trois rainures longitudinales (17) étant parallèles les unes aux autres et parallèles à l'axe longitudinal (L), ainsi qu'équidistantes les unes des autres, chaque rainure longitudinale (17) et la rainure transversale (16) étant configurées de telle sorte que celles-ci sont appropriées pour loger la section du profilé porteur (4) qui forme la zone de liaison respective (5), et chaque rainure longitudinale (17) et la rainure transversale (16) étant formées de telle sorte que celles-ci comprennent suffisamment d'espace pour un adhésif, de telle sorte qu'une liaison adhésive peut être créée entre l'élément d'introduction de charge (7) et le profilé porteur (4).

2. Jambe de force d'essieu (1) selon la revendication 1, **caractérisée en ce que** les profilés longitudinaux (11) sont collés avec le profilé de noyau (6).

3. Jambe de force d'essieu (1) selon la revendication 1, **caractérisée en ce que** le profilé porteur (4), qui comprend les profilés longitudinaux (11) et le profilé de noyau (6), est formé d'un seul tenant.

4. Jambe de force d'essieu (1) selon la revendication 1 ou 3, **caractérisée en ce que** chaque liaison adhésive (9) est configurée de telle sorte que celle-ci présente au moins deux épaisseurs de couche adhésive différentes le long de son étendue longitudinale.

5. Jambe de force d'essieu (1) selon l'une quelconque des revendications précédentes, **caractérisée en ce que** le profilé porteur (4) comprend au moins un épaulement de guidage (12) sur chacune de ses zones de liaison (5) .

6. Jambe de force d'essieu (1) selon l'une quelconque des revendications 1 à 5, **caractérisée en ce que** le profilé de noyau (6) est formé en un matériau composite de matière plastique renforcé par des fibres de verre ou en un matériau composite de matière plastique renforcé par des fibres de carbone.

7. Jambe de force d'essieu (1) selon l'une quelconque des revendications 1 à 6, **caractérisée en ce que** les profilés longitudinaux (11) sont formés en un matériau composite de matière plastique renforcé par des fibres de verre ou en un matériau composite de matière plastique renforcé par des fibres de carbone.

8. Jambe de force d'essieu (1) selon l'une quelconque des revendications précédentes, **caractérisée en ce que** les éléments d'introduction de charge (7) sont formés en aluminium ou en un matériau composite de fibres-matière plastique.

9. Jambe de force d'essieu (1) selon l'une quelconque des revendications précédentes, **caractérisée en ce que** chaque liaison adhésive (9) est formée au moyen d'un adhésif élastique.

10. Jambe de force d'essieu (1) selon l'une quelconque des revendications précédentes, **caractérisée en ce que** la première zone de liaison (5) du profilé porteur (4) présente un écart côté frontal (14) par rapport au premier élément d'introduction de charge (7) et **en ce que** la deuxième zone de liaison (5) du profilé porteur (4) présente un autre écart côté frontal (14) par rapport au deuxième élément d'introduction de charge (7) .
